# EUROPEAN PATENT SPECIFICATION

(11) **EP 0 716 367 B1**
(45) Date of publication and mention of the grant of the patent: **27.09.2000**
(21) Application number: 94120958.7
(22) Date of filing: 30.12.1994
(51) Int. Cl.: G05D 23/13, F01P 7/16

(54) **Improved thermally controlled valve**
Thermisch gesteuertes Ventil
Clapet à commande thermique

(30) Priority: 09.12.1994 JP 30640394
(43) Date of publication of application: 12.06.1996
(73) Proprietor: NIPPON THERMOSTAT Co., Ltd., Kiyoseshi, Tokyo (JP)
(72) Inventor: Kai, Kazuyuki, 6-59-2,Nakazato Kiyosechi Tokyo (JP); Hamano, Masahisa, 6-59-2,Nakazato Kiyosechi Tokyo (JP); Homma, Hitoshi, 6-59-2, Nakazato Kiyosechi Tokyo (JP); Mori, Akira, 6-59-2,Nakazato Kiyosechi Tokyo (JP); Masuko, Takashi, 6-59-2,Nakazato Kiyosechi Tokyo (JP)
(74) Representative: Wagner, Karl H., Dipl.-Ing.

(56) References cited:
- US-A- 4 630 770
- PATENT ABSTRACTS OF JAPAN vol. 5, no. 29 (M-056), 21 February 1981 & JP 55 155978 A (NIPPON THERMOSTAT), 4 December 1980,
- PATENT ABSTRACTS OF JAPAN vol. 5, no. 172 (M-095), 31 October 1981 & JP 56 097671 A (NIPPON THERMOSTAT), 6 August 1981,

## Description

### BACKGROUND OF THE INVENTION

### a) Field of the Invention

The invention concerns an improvement of thermally controlled valves provided in cooling water systems for internal combustion engines, etc. and in particular, in a cooling water passageway between an engine and a radiator for opening or closing the passageway by contacting with or separating from a valve seat a valve element fastened to a moving unit moving by thermal expansion and shrinkage due to a change in temperature of the cooling water.

### b) Description of Prior Art

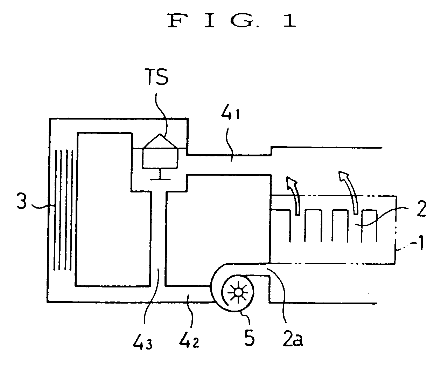

Figure 1 shows an application example of a conventional unit of thermally controlled valve comprising a cylinder block 1 in which water jackets 2 are provided to circulate cooling water around each cylinder, a radiator 3 to air-cool the cooling water, cooling water passageways 4₁ and 4₂ linking the water jackets 2 with the radiator 3, and a water pump 5 provided near a return opening 2a of the water jackets 2 for the cooling water returning from the radiator 3 to the water jackets 2.

The cooling water is circulated between the water jackets 2 and the radiator 3 by means of the water pump 5.

A cooling water bypass 4₃ is provided between the cooling water passageways 4₁ and 4₂. A thermally controlled valve TS is provided in a passageway between an engine on the outlet side of the cooling water in the water jacket 2 (on the inlet side of the cooling water in the radiator 3) for passing or shut-off the cooling water.

Such a conventional unit of thermally controlled valve TS provided in the cooling water passageway is to open the valve element by opposing to the flow of the cooling water and hence the pressure of the cooling water ( vapor presure+discharge pressure of the water pump ) may give its influence on the opening or closing of the valve element and as a result, when the temperature of the cooling water reached a specified temperature set to open the thermally controlled valve, the valve element delays to open and opens at one stroke when the temperature exceeds the specified temperature to open the valve element.

This phenomenon is called "overshoot" and the water cooled in the radiator flushes into the cooling water system to lower the temperature of the cooling water much below the temperature set to close the valve element and shut the valve element immediately. This phenomenon is called "undershoot".

Repeating of the overshoot and undershoot generates a thermal hunting. Continued thermal hunting may cause instability in the cooling water temperature and causes problems as described hereunder.

The cooling water having unstable temperatures entering the water jacket 2 of the engine reduces the service life of the engine or deteriorates the mileage due to the fluctuation of the temperature of the engine block or cylinder block.

In addition, thermal control of air-conditioner is disordered and the driver may feel uncomfortable. Further, such an unstable temperature causes fluctuation of the reading of the water thermometer to give the driver anxiety.

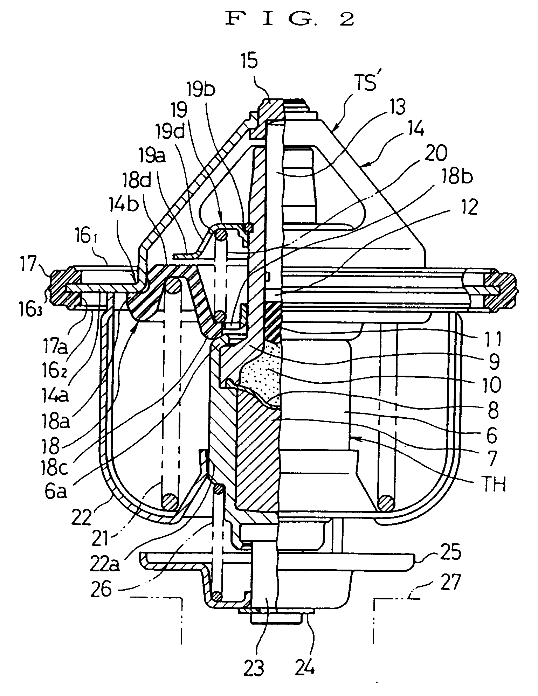

As shown in Figure 2, there is a conventional unit of thermally controlled valve TS' of vertical 2-stage to reduce the thermal hunting by preventing such a large amount of cold water from flowing at one stroke immediately after the opening of the valve and to hold down the initial flow rate.

The thermally controlled valve TS' is comprised of a thermo-element TH, a case 6, a thermally expanding unit(wax) 7 for thermal expansion/shrinkage of a mixture of paraffin or cupper powder housed in the case 6, a diaphragm 8 made of nitrile rubber, etc. to seal the thermally expanding unit 7 in the case 6, a guide cylinder 9 connected with an opening of the case 6 through the diaphragm 8, and in succession from the diaphragm 8 in the guide cylinder 9 a fluid 10, a rubber piston 11, a back-up plate 12 made of poly-tetra fluoro-ethylene(P.T.F.E.), etc. and a moving unit 13 (piston).

The thermally controlled valve TS' is comprised of a valve seat body 14, a support unit 15 mounted on the top thereof to which the moving unit 13 is pushed by a spring as described hereunder, a flange 14a of the valve seat body 14 fastened to the inner surface 17a of an elastic ring 17 formed with sealing projections 16₁, 16₂ and 16₃ on the upper surface, lower surface and outer surface thereof. The elastic ring 17 is set into a housing, etc. in the passageway between the water jackets and the radiator to mount the thermally controlled valve TS'. The thermally controlled valve TS'is further comprised of a valve seat 14b formed near the flange 14a of the valve seat body 14, a valve element 18 the inner surface of which is slidably supported by the guide cylinder 9 forming the thermo-element TH, an outer surface 18a contacting with and separating from the valve seat 14b, a plurality of circulation holes 18b provided near the inner surface of the first valve element 18 and the bottom part 18c of the outer surface of the circulation holes 18b contacting with the top end 6a of the case 6.

The second valve element 19 is a rigid pushing plate and the inner surface 19b is fastened to the guide cylinder 9 forming the thermally controlled valve TH so as to have the outer surface 19a face to a plan 18d (the upper side in the Figure) with a specified spacing and a circulation hole 19d is provided between the outer surface 19a and the inner surface 19b. The first spring 20 is mounted by compression between the pushing plate 19 and the first valve element 18.

The second spring 21 is mounted on by compression between the first valve element 18 and a frame 22 fixed on the lower portion of a flange 14a of the valve seat body 14. A guide hole 22a is formed on lower portion of the frame 22 and the case 6 forming the thermally controlled valve TH is slidably supported by the guide hole 22a. A supporting axis 23 is connected with the bottom of the case 6 forming the thermally controlled valve TH and the third valve element 25 is slidably supported by a stopper 24 at the tip of the supporting axis 23.

Third spring 26 is mounted by compression between the third valve element 25 and the case 6 forming the thermally controlled valve TH and the third valve element 25 is pushed by the third spring 26 to a valve seat 27 of the housing, etc. provided in a by-pass of the cooling water system.

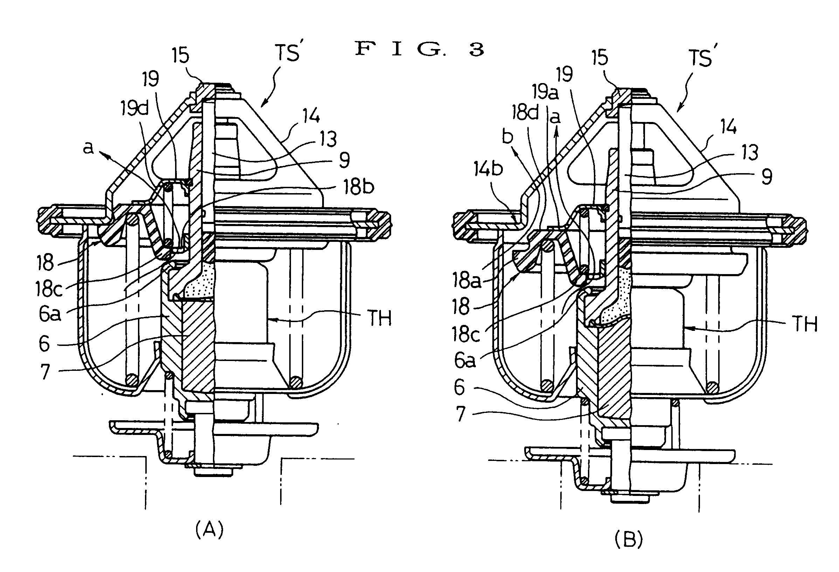

Because the vertical 2-stage thermally controlled valve is constructed as described above, when the temperature of the cooling water goes up, the thermally expanding unit 7 forming the thermally controlled valve TH expands, as shown in Figure 3(A), to project the moving unit 13 which is in contact with the supporting unit 15. However, the moving unit 13 does not move but the entire unit of the thermally controlled valve TH moves downward and the pushing plate 19 fastened to the guide cylinder 9 also moves downward to separate the tip 6a of the case 6 connected with the guide cylinder 9 from the bottom 18c of the valve element 18.

Initially a small amount of cooling water flows as indicated by an arrow "a" through the spacing, the circulation hole 18b formed along the inner circumferential surface of the valve element 18 and circulation hole 19d formed on the pushing plate 19.

When the temperature of the cooling water further goes up, the thermally expanding unit 7 forming the thermally controlled valve further expands as if the moving unit 13 projects from the guide cylinder 9 but to further lower the guide cylinder 9 and the case 6. Then, the outer circumferential surface 19a of the pushing plate 19 fastened to the guide cylinder 9 pushes the plane 18d of the valve element 18 downward to separate the outer circumferential surface 18a of the valve element 18 from the vlave seat 14b to flow the cooling water as indicated by an arrow "b" through the space between the valve seat 14b and the outer circumferential surface 18a of the valve element 18 and to flow as indicated by the arrow "a".

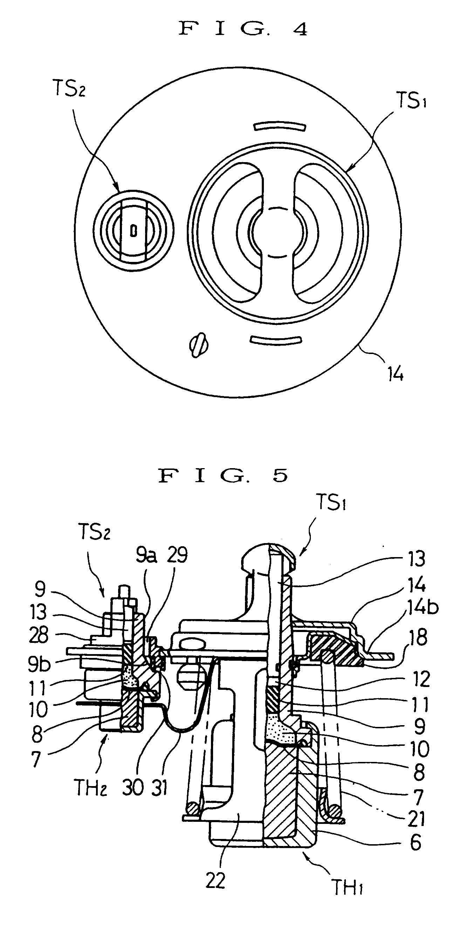

As described above, a little amount of water is designed to flow initially with an increase in the temperature to prevent a large amount of cold water from flowing at one stroke when the valve is opened to restrain the initial flow to elimnate the thermal hunting. As shown in Figure 4 and Figure 5, there is another thermally controlled valve having a sub-valve to reduce such a thermal hunting. In the Figures shown hereunder, the structure identical to the thermally controlled valve of the vertical 2-stage type shall have identical identification marks.

The units are comprised of a main valve TS₁ and a thermo-element TH₁ of a nearly equal construction to the conventional valve. The main valve TS₁ is mounted eccentrically from the center of the disk of the valve seat 14 (in the right hand).

TS₂ is the sub-valve or a sub-thermally controlled valve and TH₂ is a thermo-element forming the sub-thermally controlled valve mounted eccentrically from the center of the disk of the valve seat 14(in the left hand in the Figure) and has nearly an identical structure to that of conventional units.

The difference between the main thermally controlled valve TS₁ and the sub-thermally controlled valve TS₂ is described hereunder.

Of the thermo-element TH₂ forming the sub-valve TS₂, the tip end of the moving unit 13 is held eccentrically from the center of the valve seat body 14 by a holding unit 28.

The guide cylinder 9 has a smaller diameter at an upper portion 9a and a larger diameter at a lower portion 9b.

A circulation passageway 29 is formed between the upper portion 9a of the smaller diameter and the holding unit 28.

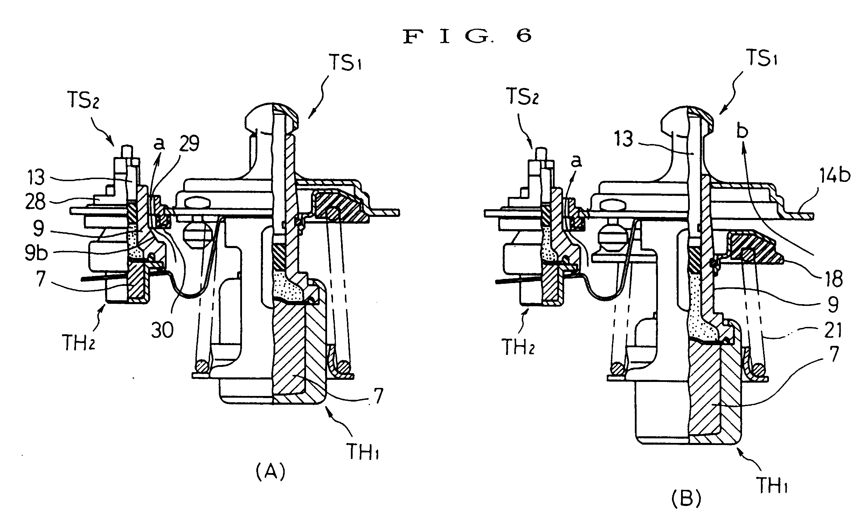

The lower portion 9b is pushed to contact with a valve seat 30 passing through the circulation passageway 29 to close the valve by pushing up the lower portion of the sub-valve TH₂ by a spring-plate 31. The thermally controlled valve having a sub-valve is formed as described above and therefore, as shown in Figure 6(A), the thermally expanding unit 7 of the thermo-element TH₂ forming the sub-valve TS₂ expands with an increase in the water temperature. The moving unit 13 works to project but does not move because it is held by the holding unit 28 and the entire TH₂ moves downward and the guide cylinder 9 moves downward to have the lower portion 9b of the larger diameter separate from the valve seat 30. Then, the cooling water flows through the circulation passageway 29 as indicated by the arrow "a".

Further, as shown in Figure 6(B), the thermally expanding unit 7 forming the thermo-element TH₁ expands with the increase in the water temperature to have the moving unit 13 work to project but the entire thermo-element TH₁ moves downward to separate the valve 18 fastened to the guide cylinder 9 resisting the spring 21 from the valve seat 14b.

The cooling water flows as indicated by the arrow "b" through the spacing between the valve seat 14b and the valve element 18. The flow may be made as indicated by the arrow "a".

As set forth above, the sub-valve is first opened with an increase in the temperature of cooling water to flow a small amount of water to the radiator and hence, a large amont of the cooling water is prevented from flowing at one stroke immediately after the opening of the valve. Thus, the initial flow is restrained and such a thermal hunting may be reduced.

The thermally controlled valve of vertical 2-stage as shown in Figure 2 or the thermally controlled valve having a sub-valve as shown in Figure 4 and Figure 5 have the advantage of reducing thermal hunting. However, these conventional valves have to be assembled with many parts through various processes.

In addition, the structures are fairly complex and therefore the production and the maintenance are costly. The weight is also heavier than that of thermally controlled valve having a single valve.

Further, attention is drawn to JP-A-55 155 978 which shows an apparatus for opening and closing passages of seal valves separately in a thermostat for cooling water in an internal combustion engine by providing a plurality of seal valves in a valve to be operated by the thermal expansion of a wax element.

Further, US-A-4 630 770 shows a valve construction having an annular valve seat and a movable valve member for opening and closing the valve seat and being operatively interconnected to a thermal power element that is carried by the valve construction. The valve member has an annular rigid part for engaging the valve seat and has an annular fexible part for also engaging the valve seat at a point upstream of the rigid part, the parts of the valve member being so constructed and arranged that the rigid part moves out of engagement with and away from the valve seat a certain distance before the flexible part moves out of engagement with the valve seat. The flexible part of the valve member has an opening therethrough that is adapted to provide a certain sized fluid path through the flexible part of the valve member when the rigid part of the valve member is engaging the valve seat.

The present invention provides a thermally controlled valve as set forth in claim 1. Preferred embodiments are disclosed in the dependent claims.

### SUMMARY OF THE INVENTION

The present invention relates to an improvement of the conventional units of thermally controlled valves by modifying the structure of the valves to streamline the construction and maintenance with eliminating the thermal hunting.

### DETAILED DESCRIPTION OF THE INVENTION

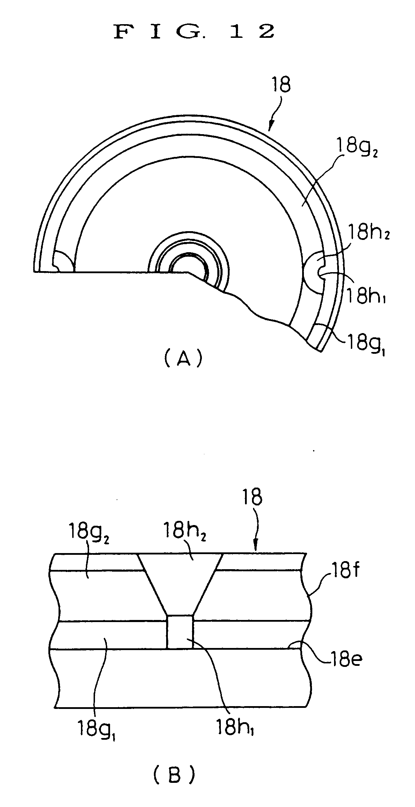

The thermally controlled valve according to the present invention as shown in Figure 12, Figure 13 and Figure 14 is to be provided in a cooling water system for internal combustion engines, etc. to open or close the cooling water system. The thermally controlled valve is comprised of a valve element 18 fastened to a moving unit of thermo-element TH and a valve seat 14b.

The valve seat 14b has a nearly horizontal portion 14b₁ and a nearly vertical portion 14b₂ which the valve element 18 contacts with and separates from . The valve element 18 is formed with a side in a convex shape and has a nearly horizontal portion 18e which contacts with and separates from the horizontal portion 14b₁, a nearly vertical portion 18f which contacts with and separates from the vertical portion 14b₂ and two ring lips 18g₁ and 18g₂ formed on the vertical portion 18f. Small open cooling water passageways 18h₁ are provided on several parts (two parts in this case) of the first ring lip 18g₁ on the side of the horizontal portion 18e in a direction nearly vertical to the first ring lip 18g₁.

Large open cooling water passageways 18h₂ are provided on several parts of the second ring lip 18g₂ on the upper side of the vertical portion 18f in a direction nearly vertical to the second ring lip 18g₂.

Preferably the thermally controlled valve according to the present invention is formed with cooling water passageways 18h provided on several parts of one ring lip 18g formed on nearly vertical portion 18f of the valve element 18. The cooling water passageways 18h are formed in a direction nearly vertical to the ring lip 18g and in a tapered shape from the upper side of the valve element 18 toward the horizontal portion 18e.

Preferably the thermally controlled valve according to the present invention is formed with cooling water passageways 18h₁ and 18h₂ provided on several parts (two parts in this case) of two ring lips 18g₁ and 18g₂ formed on a nearly vertical portion 18f of the valve element 18.

The cooling water passageways 18h₁ and 18h₂ having a small open groove each are formed in a direction nearly vertical to the first ring lip 18g₁ on several parts (two parts in this case) in a tapered shape from the upper side of the valve element 18 toward the horizontal portion 18e and the cooling water passageways 18h₁ and 18h₂ having a large open groove each are formed in a direction nearly vertical to the second ring lip 18g₂ on several parts (two parts in this case) in a tapered shape from the upper side of the valve element 18 toward the horizontal portion 18e.

Preferably the thermally controlled valve according to the present invention is to provide the thermo-element TH with a thermally expanding unit 7, which expands and shrinks with a change in the temperature of the cooling water, housed in a case 6 and has a moving unit 13 sliding a guide cylinder 9 connected with the case 6 by the thermally expanding unit 7 which thermally expands and shrinks and the tip end of the moving unit 13 is supported by the top end 14c' of a supporting portion 14c of the valve seat body 14 and the valve element 18 is fastened to the guide cylinder 9 moving reactively along with sliding of the moving unit 13 so as to contact with and separate from the valve seat 14b of the valve seat body 14.

Of the thermally controlled valves according to the present invention (as shown in Figures 12, 13 and 14), the moving unit 13 is to project itself from the guide cylinder 9 by the expansion of the thermally expanding unit 7 due to an increase in the temperature of the cooling water. However, the tip end of the moving unit 13 is held with the top end 14c'of the supporting unit 14c of the valve seat body 14 and hence the moving unit 13 stays there and the entire thermo-element TH moves downward to move the valve element 18 fastened to the guide cylinder 9 .

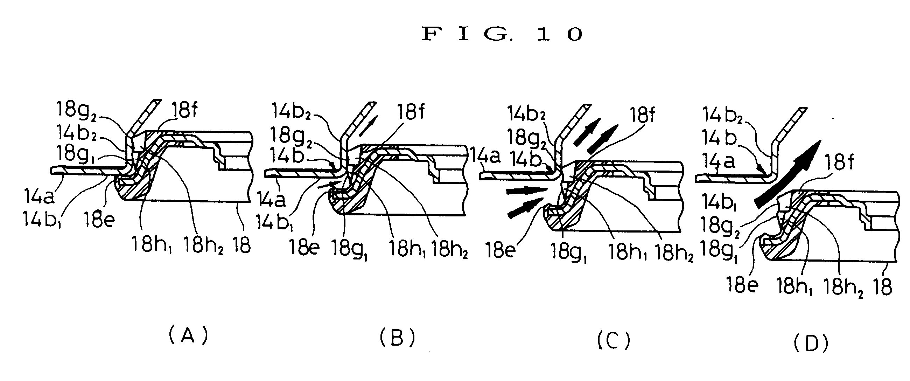

As a result, the horizontal portion 18e of the valve element 18 separates from the horizontal portion 14b₁ of the valve seat 14b. However, the ring lip 18g₁ formed on the vertical portion 18f still stays on the vertical portion 14b₂ and the cooling water flows slightly as shown by an arrow in Figure 10 (B) through the cooling water passageway 18h₁ formed in a direction nearly vertical to the ring lip 18 g₁.

When the temperature of the cooling water goes up further, the first ring lip 18g₁ formed on the vertical portion 18f separates from the vertical portion 14b₂ but the second ring lip 18g still stays on the vertical portion 14b₂ to flow the cooling water more as shown by an arrow in the Figure 10(C) through the cooling water passageway 18h₂ formed in a direction nearly vertical to the second ring lip 18g₂.

When the temperature of the cooling water goes up more, the second ring lip 18g₂ separates from the vertical portion 14b₂ and the cooling water flows further more as shown by an arrow in Figure 10 (D).

### BRIEF DESCRIPTION OF THE DRAWING

Figure 1 is a drawing showing an application example of a conventional unit of thermally controlled valve.
Figure 2 is a sectional drawing showing a valve element closed of a conventional unit of thermally controlled valve of vertical 2-stage.
Figure 3 is a drawing showing the operation of a conventional unit of thermally controlled valve of vertical 2-stage.
Figure 4 is a plane drawing showing a conventional unit of thermally controlled valve having a sub-valve.
Figure 5 is a sectional drawing showing a valve element closed of a conventional unit of thermally controlled valve having a sub-valve.
Figure 6 is a drawing showing the operation of a conventional unit of thermally controlled valve having a sub-valve.

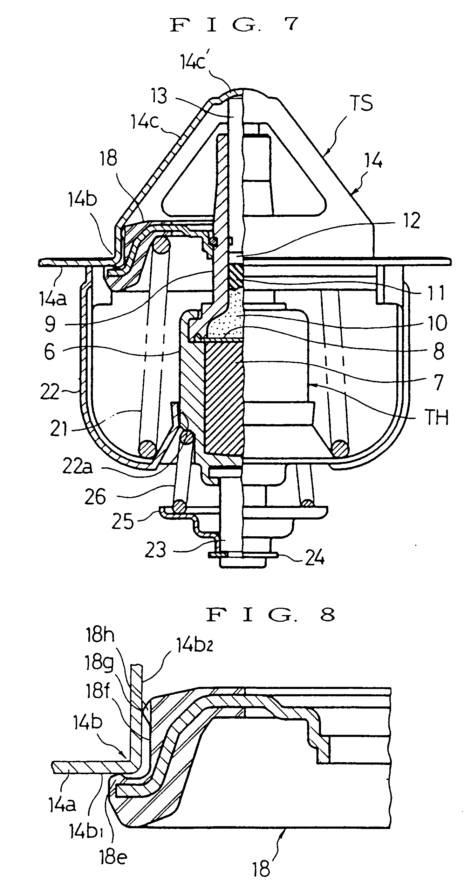

Figure 7 is a sectional drawing showing a valve element closed of the thermally controlled valve not part of the present invention.
Figure 8 is an enlarged drawing showing a valve element and a valve seat closed of the thermally controlled valve not part of the present invention.

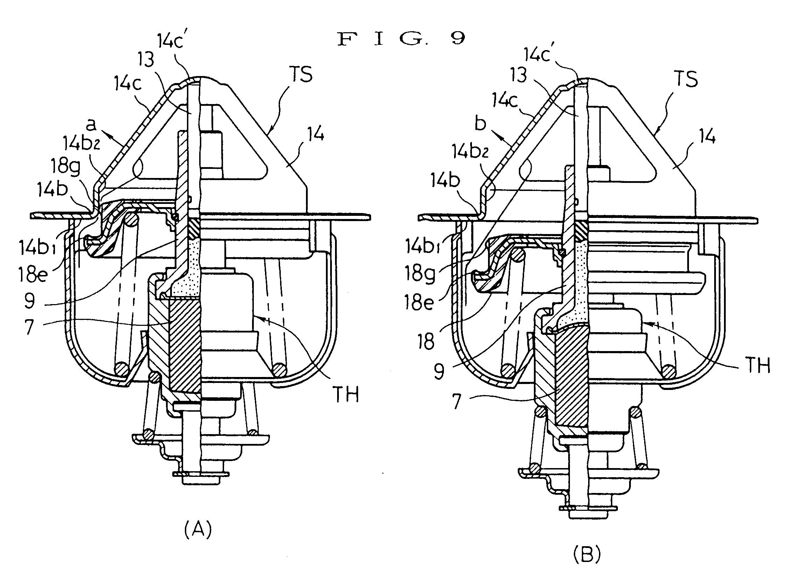

Figure 9 is a drawing showing the operation of the thermally controlled valve not part of the present invention.
Figure 10 is a drawing showing the structure of the major valve element and valve seat and the operation of the thermally controlled valve not part of the present invention.

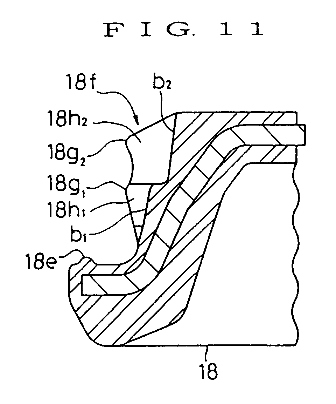

Figure 11 is a drawing showing detailed structure of a valve element of the thermally controlled valve not part of the present invention.
Figure 12 is a drawing showing an example of the thermally controlled valve according to the present invention.

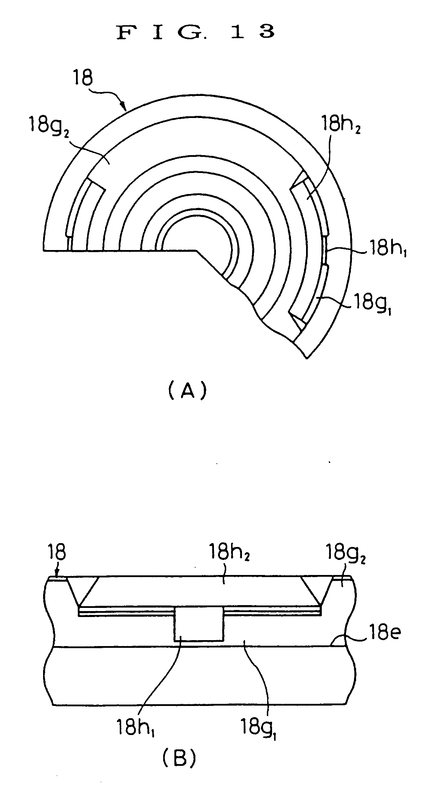

Figure 13 is a drawing showing other example of the thermally controlled valve according to the present invention.

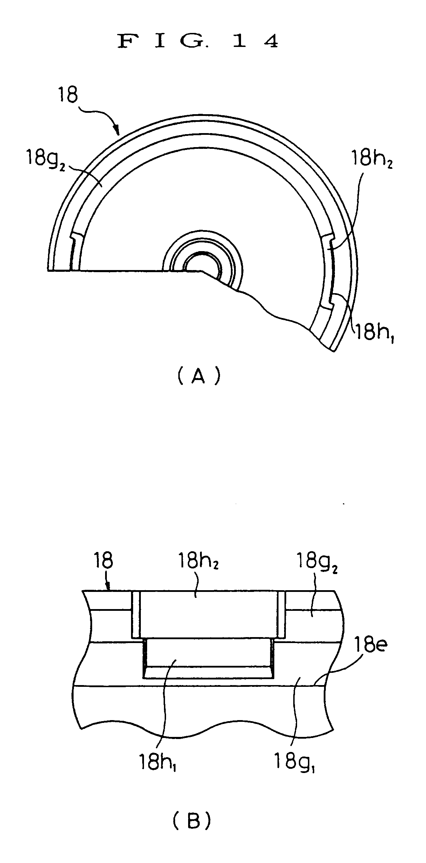

Figure 14 is a drawing showing other example of the thermally controlled valve according to the present invention.

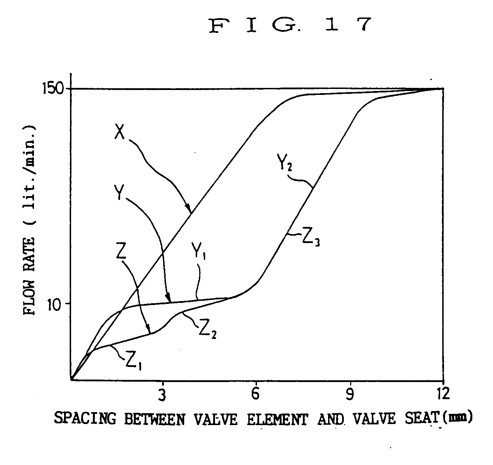

Figure 17 is a drawing showing a graph of flow rate properties of the thermally controlled valve according to the present invention as compared with those of a conventional unit of thermally controlled valve.

### DESCRIPTION OF THE PREFERRED EMBODIMENT

The preferred embodiments of this invention are described hereunder with reference to the accompanying drawings.

The detailed difference between the thermally controlled valve according to the present invention and the conventional units of thermally controlled valves is described hereunder.

Figure 8 shows a detail of the valve seat 14b of the thermally controlled valve TS which is not claimed in the present invention, formed on the valve seat body 14, having a nearly horizontal portion 14b₁ and a nearly vertical portion 14b₂. The difference between this thermally controlled valve TS and the conventional units is that the valve element 18, which contacts with and separates from the valve seat 14b, is formed with a side in a convex shape, the horizontal portion 18e which contacts with and separates from the horizontal portion 14b₁, the vertical portion 18f which contacts with and separates from the vertical portion 14b₂ and a ring lip 18g formed on the nearly vertical portion 18f and the cooling water passageways 18h formed on several parts of the ring lip 18g with a groove in V-shape each tapered from the upper side of the valve element 18 toward the horizontal part 18e in a direction nearly vertical to the ring lip 18g.

The cooling water passageways 18h are formed as described above and therefore as shown in Figure 9(A) the moving unit 13 is to project itself with expansion of the thermally expanding unit 7 due to an increase in the temperature of the cooling water. However, the tip end of the moving unit 13 is held with the top end 14c'of the supporting unit 14c of the valve seat body 14. Hence, the moving unit 13 stays there and the entire thermo-element TH moves downward to move the valve element 18 fastened to the guide cylinder 9 and as a result, the horizontal portion 18e of the valve element 18 separates from the horizontal portion 14b₁ of the valve seat 14b.

However, the ring lip 18g₁ formed on the vertical portion 18f still stays on the vertical portion 14b₂ and the cooling water flows slightly as shown by an arrow "a" through the cooling water passageway 18h (as shown in Figure 8) formed in a direction nearly vertical to the ring lip 18 g₁.

When the temperature of the cooling water goes up further, as shown in Figure 9(B), the valve element 18 fastened to the guide cylinder 9 moves more downward to have the ring lip 18g formed on the vertical portion 18f separate from the vertical portion 14b₂ and the cooling water flows more as shown by an arrow "b" as in the case of the conventional units. When the temperature of the cooling water goes up more, the second ring lip 18g₂ separates from the vertical portion 14b₂ and the cooling water flows more as shown by an arrow in Figure 10 (D).

Figure 10 shows the major portion of a thermally controlled valve which is not part of this invention and the operation of the valve element and the valve seat.

The thermally controlled valve is provided in a cooling water system for internal combustion engine, etc. to open or close the cooling water system and is comprised of the valve element 18 fastened to the moving unit of the thermo-element TH which works by detecting the temperature of the cooling water and a valve seat 14b which the valve element 18 contacts with and separates from.

The valve seat 14b has a nearly horizontal portion 14b₁ which the valve element 18 contacts with and separates from and a nearly vertical portion 14b₂. The valve element 18 has a side formed in a convex shape and has a nearly horizontal portion 18e which contacts with and separates from the horizontal portion 14b₁, a nearly vertical portion 18f which contacts with and separates from the vertical portion 14b₂ and two ring lips 18g₁ and 18g₂ formed on vertical portion 18f.

Passageways 18h₁ and 18h₂ are provided on several parts ( two parts in this case ) of the two ring lips 18g₁ and 18g₂ in a direction nearly vertical to the two ring lips 18g₁ and 18g₂. The operation of the thermally controlled valve is as shown in Figure 10(A). When the temperature of the cooling water is low, the horizontal portion 18e contacts with the horizontal portion 14b₁ in the closing condition.

When the temperature of cooling water goes up to expand the thermally expanding unit 7, the moving unit 13 is to project itself. However, the tip end of the moving unit 13 is held at the top end 14c'of the supporting unit 14c of the valve seat body 14 . Hence, the moving unit 13 stays there and the entire thermo-element TH moves downward to move the valve element 18 fastened to the guide cylinder 9 and as a result the horizontal portion 18e of the valve element 18 separates from the horizontal portion 14b₁ of the valve seat 14b (see Figure 10(B)). However, the first ring lip 18g₁ formed on the vertical portion 18f still stays on the vertical portion 14b₂ and the cooling water flows slightly as shown by an arrow through the cooling water passageway 18h formed in a direction nearly vertical to the rig lip 18 g₁.

When the temperature of the cooling water goes up further, as shown in Figure 9(B), the valve element 18 fastened to the guide cylinder 9 moves more downward to have the ring lip 18g formed on the vertical portion 18f separate from the vertical portion 14b₂ and the cooling water flows more as shown by an arrow "b" as in the case of the conventional units.

When the temperature of the cooling water goes up further more, the second ring lip 18g₂ separates from the vertical portion 14b₂ to flow more cooling water as shown by an arrow in Figure 10 (D).

Figure 11 shows the detail of the valve element 18.

Passageways 18h₁ and 18h₂ are provided on several parts (two parts in this case) of the two ring lips 18g₁ and 18g₂ formed on the vertical portion 8f of the valve element 18 in a direction nearly vertical to the two ring lips 18g₁ and 18g₂.

The cooling water passageways 18h₁ and 18h₂ having a small open groove each are formed in a direction nearly vertical to the first ring lip 18g₁ on several parts (two parts in this case) of the first ring lip 18g₁ in a tapered shape from the top end of the valve element 18 toward the horizontal portion 18e.

Further, the cooling water passageways 18h₁ and 18h₂ having a large open groove each are formed in a direction vertical to the second ring lip 18g₂ in a tapered shape from the top end of the valve 18 toward the horizontal portion 18e.

The small open groove and the large open groove forming the cooling water passageways 18h₁ and 18h₂ are in a v-shape and the groove bottoms b₁ and b₂ are sloped downward.

The cooling water passageways 18h₁ and 18h₂ are formed as described above and therefore the cooling water flow increases at a specified gradient of flow rate with the separation of the two ring lips 18g₁ and 18g₂ from the vertical portion 14b₂.

Of Figure 17, the axis of ordinate indicates the logarithmic properties of cooling water flow rate X of a conventional unit of thermally controlled valve, of flow rate Y of the thermally controlled valve having one ring lip 18g on the valve element 18 and of flow rate Z of the thermally controlled valve having two ring lips 18g₁ and 18g₂ on the valve element 18 according to the present invention. The axis of abscissa indicates the spacing between the valve element and the valve seat.

In the case of the flow rate X of the conventional unit of thermally controlled valve, the flow rate increases at a fixed flow rate gradient proportional to the spacing between the valve element and the valve seat. In the case of the flow rate Y of the thermally controlled valve in which one ring lip 18g is provided on the valve element 18 and the cooling water passageway 18h is provided on the ring lip 18g, the flow rate of the cooling water flowing through the cooling water passageway 18h is low until the time( Y₁ ) the ring lip 18g separates from the vertical portion 14b₂. When ( Y₂ ) the ring lip 18g separates from the vertical portion 14b₂ , the flow rate increases in proportion to the spacing between the valve element and the valve seat.

The gradient ( Y₁ ) of the flow rate of the cooling water flowing the cooling water passageway 18h may be designed at a desired value by adjusing the size of the open groove in a V-shape and the slope of the groove bottom forming the cooling water passageway 18h, etc.

In the case of the flow rate Z of the thermally controlled valve according to the present invention in which two ring lips 18g₁ and 18g ₂ are provided on the vertical portion 18f and the cooling water passageways 18h₁ and 18h₂ are provided on the ring lips 18g₁ and 18g₂, the flow rate is low until the time ( Z₁ ) the first ring lip 18g₁ separates from the vertical portion 14b₂. The flow rate is more than that in the case of Z₁ until the time ( Z₂ ) the second ring lip 18g₂ separates from the vertical portion 14b₂. When( Z₃ ) the second ring lip 18g₂ separates from the vertical portion 14b₂. the flow rate increases more.

Other embodiments of the thermally controlled valve according to the present invention shown in Figure 12( A ) and ( B ), Figure 13( A ) and Figure 14( A ) and ( B ) indicate two ring lips 18g₁ and 18g₂ formed on the vertical portion 18f and the cooling water passageways 18h₁ and 18h₂ formed on the ring lips 18g₁ and 18g₂. Each (A) in the Figures is a plane drawing viewing the valve element 18 from the lower side and each (B) is a side elevation of the cooling water passageway.

The valve element 18 is formed with the side in a convex shape and has a nearly horizontal portion 18e which contacts with and separates from the horizontal portion 14b₁ and a nearly vertical portion 18f which contacts with and separates from the vertical portion 14b₂ and the two ring lips 18g₁ and 18g₂ formed on the vertical portion 18f. Small open cooling water passageways 18h₁ are provided on several parts (two parts in this case) of the first ring lip 18g₁ on the horizontal portion 18e in a direction vertical to the first ring lip 18g₁. Large open cooling water passageways 18h₂ are provided on several parts of the second ring lip 18g₂ on the vertical portion 18f in a direction nearly vertical to the second ring lip 18g₂. The flow rate properties and the gradient of the flow rate, etc. as shown by (Z₁) and (Z₂) in Figure 17 may be changed as required by adjusting the design of the size or shape or groove bottom slope of the small open cooling water passageways 18h₁ or the large open cooling water passageways 18h₂ respectively.

As described above, upon an increase in the temperature of the cooling water, the valve opens to flow initially a little cooling water to the radiator and when the temperature goes up, the valve opens more widely to flow more cooling water.

In this way, a large amount of the cooling water is prevented from flowing at one stroke immediately after opening of the valve. Thus, the initial flow is restrained and such a thermal hunting can be eliminated.

The thermally controlled valve according to the present invention is to improve the valve element or the valve seat to flow a little cooling water initially to the radiator upon an increase in the temperature of the cooling water and to prevent a large amount of the cooling water from flowing at a stroke as in the case of the conventional units of thermally controlled valves of a vertical 2-stage type or having a sub-valve. In addition, various thermally controlled valves having optimum flow rate properties are available by designing the most suitable position and shape of the ring lips formed on the vertical portion of the valve element, number and size of the cooling water passageways formed on the ring lips and spacing between the vertical portions of the valve element and the valve seat of particular models of automobiles,

It is noteworthy to describe that the improvement may be made on the valve element and the valve seat only and therefore the thermally controlled valve according to the present inventon can be assembled with less number of parts through less assemblying processes as compared with the conventional thermally controlled valves of vertical 2-stage or having a sub-valve. As a result, the thermally controlled valve of this invention requires less production and less maintenance costs that are almost equal to those costs of the Conventional general single valves.

## Claims

1. A thermally controlled valve, to be provided in a cooling water system for internal combustion engines, to open or close passageways of the cooling water, comprising a valve element (18) fastened to a moving unit of a thermo-element (TH) and a valve seat (14b) which the valve element (18) contacts with and separates from,and the valve seat (14b) has a nearly horizontal portion (14b₁) and a nearly vertical portion (14b₂) which the valve element (18) contacts with and separates from, and the valve element (18) is formed with a side in a convex shape and has a nearly horizontal portion (18e) which contacts with and separates from the horizontal portion (14b₁) of the valve seat (14b) and a nearly vertical portion (18f) which contacts with and separates from the vertical portion (14b₂) of the valve seat (14b), characterised in that two ring lips (18g₁, 18g₂) are formed on the vertical portion (18f) of the valve element (18), and small open cooling water passageways (18h₁) are provided on several parts of the first ring lip (18g₁) on the side of the horizontal portion (18e) of the valve element (18) in a direction nearly vertical to the first ring lip (18g₁) and large open cooling water passageways (18h₂) are provided on several parts of the second ring lip (18g₂) on the upper side of the vertical portion (18f) of the valve element (18) in a direction nearly vertical to the second ring lip (18g₂).

2. The thermally controlled valve according to claim 1, wherein the cooling water passageways (18h₁, 18h₂) provided on several parts of one ring lip (18g₁, 18g₂) formed on the nearly vertical portion (18f) of the valve element (18) in a direction nearly vertical to the ring lip (18g₁, 18g₂) are provided with an open groove each in a tapered shape from the upper side of the valve element (18) toward the horizontal portion (18e) of the valve element.

3. The thermally controlled valve according to claim 1, wherein the cooling water passageways (18h₁, 18h₂) provided on several parts of two ring lips (18g₁, 18g₂) formed on the nearly vertical portion (18f) of the valve element (18) are formed with a small open groove each formed on several parts of the first ring lip (18g₁) in a direction vertical to the first ring lip (18g₁) and in a tapered shape from the top end of the valve element (18) toward the horizontal portion (18e) and a large open groove each formed on several parts of the second ring lip (18g₂) in a direction vertical to the second ring lip (18g₂) and in a tapered shape from the upper side of the valve element (18) toward the horizontal portion (18e) of the valve element (18).

4. The thermally controlled valve according to claim 1, wherein the thermo-element (TH) is provided with a thermally expanding unit (7), which expands and shrinks with a change in the temperature of the cooling water, housed in a case (6) and has a moving unit (13) sliding a guide cylinder (9) connected with the case (6) by the thermally expanding unit (7) which thermally expands and shrinks, and the tip end of the moving unit (13) is supported by the top end (14c') of a supporting portion (14c) of the valve seat body (14), and the valve element (18) is fastened to the guide cylinder (9) moving reactively with sliding of the moving unit (13) so as to contact with and separate from the valve seat (14b) of the valve seat body (14).

## Patentansprüche

1. Ein thermisch geregeltes Ventil, das in einen Kühlwassersystem für Verbrennungsmotoren vorgesehen ist, und zwar zum Öffnen oder Schließen von Durchlässen für Kühlwasser, wobei das Ventil ein Ventilelement (18) befestigt an einer Bewegungseinheit eines Thermoelements (TH) aufweist und einen Ventilsitz (14b), den das Ventilelement (18) kontaktiert und von dem es sich trennt, wobei der Ventilsitz (14b) einen nahezu horizontalen Teil (14b₁) und einen nahezu vertikalen Teil (14b₂) besitzt, den das Ventilelement (18) kontaktiert und sich davon trennt, und wobei das Ventilelement (18) mit einer Seite in einer konvexen Form gebildet ist und einen nahezu horizontalen Teil (18e) besitzt, der den horizontalen Teil (14b₁) des Ventilsitzes (14b) kontaktiert und sich von diesem trennt, und ferner einen nahezu vertikalen Teil (18f) besitzt, der den vertikalen Teil (14b₂) des Ventilsitzes (14b) kontaktiert und sich von diesem trennt, gekennzeichnet durch zwei Ringlippen (18g₁, 18g₂), die auf dem vertikalen Teil (18f) des Ventilelements (18) gebildet sind, und wobei kleine, offene Kühlwasserdurchlässe (18h₁) auf mehreren Teilen der ersten Ringlippe (18g₁) an der Seite des horizontalen Teils (18e) des Ventilelements (18) in eine Richtung nahezu vertikal zur ersten Ringlippe (18g₁) vorgesehen sind, und wobei große, offene Kühlwasserdurchlässe (18h₂) auf mehreren Teilen der zweiten Ringlippe (18g₂) auf der Oberseite des vertikalen Teils (18f) des Ventilelements (18) in eine Richtung nahezu vertikal zur zweiten Ringlippe (18g₂) vorgesehen sind.

2. Thermisch geregeltes Ventil gemäß Anspruch 1, wobei die Kühlwasserdurchlässe (18h₁,18h₂), die an mehreren Teilen einer am nahezu vertikalen Teil (18f) des Ventilelements (18) gebildeten Ringlippe (18g₁, 18g₂) in einer Richtung nahezu vertikal zur Ringlippe (18g₁, 18g₂) vorgesehen sind, mit einer offenen Nut versehen sind, die eine jede eine verjüngte Form von der Oberseite des Ventilelements (18) in Richtung auf den horizontalen Teil (18e) des Ventilelements hat.

3. Thermisch geregeltes Ventil gemäß Anspruch 1, wobei die Kühlwasserdurchlässe (18h₁, 18h₂), die an mehreren Teilen der auf dem nahezu vertikalen Teil (18f) des Ventilelements (18) gebildeten zwei Ringlippen (18g₁, 18g₂) mit einer kleinen, offenen Nut gebildet sind, die jeweils an mehreren Teilen der ersten Ringlippe (18g₁) in einer Richtung vertikal zur ersten Ringlippe (18g₁) gebildet sind, und zwar in einer sich verjüngenden Form vom Oberende des Ventilelements (18) in Richtung auf den horizontalen Teil (18e), und ferner mit einer großen, offenen Nut, von denen eine jede auf mehreren Teilen der zweiten Ringlippe (18g₂) in eine Richtung vertikal zur zweiten Ringlippe (18g₂) gebildet ist, und zwar in einer sich verjüngenden Form von der Oberseite des Ventilelements (18) in Richtung auf den horizontalen Teil (18e) des Ventilelements (18).

4. Thermisch geregeltes Ventil gemäß Anspruch 1, wobei das Thermoelement (TH) mit einer thermischen Expansionseinheit (7) versehen ist, die sich ausdehnt und zusammenschrumpft mit einer Veränderung der Temperatur des Kühlwassers, und zwar aufgenommen in einem Gehäuse (6) und mit einer Bewegungseinheit (13) ausgestattet, die einen mit dem Gehäuse (6) verbundenen Führungszylinder (9) gleitet bzw. verrutscht, und zwar durch die thermische Expansionseinheit (7), die sich thermisch ausdehnt und schrumpft, und wobei das Spitzenende der Bewegungseinheit (13) durch das Oberende (14c') eines Trageteils (14c) des Ventilsitzkörpers (14) getragen ist, und wobei das Ventilelement (18) am Führungszylinder (9) befestigt ist, der sich in Reaktion mit dem Gleiten der Bewegungseinheit (13) bewegt, um so den Ventilsitz (14b) des Ventilsitzkörpers (14) zu kontaktieren und sich von diesem zu trennen.

## Revendications

1. Clapet à commande thermique destiné à un système d'eau de refroidissement de moteur à combustion interne, pour ouvrir ou fermer des passages d'eau de refroidissement, comprenant un élément de clapet (18) fixé à un élément mobile d'un thermoélément (TH) et un siège de clapet (14b) avec lequel l'élément de clapet (18) vient au contact et dont il s'écarte, le siège de clapet (14b) ayant une partie presque horizontale (14b₁) et une partie presque verticale (14b₂) avec lesquelles l'élément de clapet (18) vient en contact et dont il s'écarte, l'élément de clapet (18) étant constitué d'un côté d'une forme convexe et ayant une partie presque horizontale (18e) qui vient en contact avec puis s'écarte de la partie horizontale (14b₁) du siège clapet (14b), et une partie presque verticale (18f) qui vient en contact et s'écarte de la partie verticale (14b₂) du siège clapet (14b), caractérisé en ce que deux lèvres annulaires (18g₁, 18g₂) sont formées sur la partie verticale (18f) de l'élément de clapet (18) et des passages d'eau de refroidissement à petite ouverture (18h₁) sont prévus sur plusieurs parties de la première lèvre annulaire (18g₁) du côté de la partie horizontale (18e) de l'élément de clapet (18) dans une direction presque verticale de la première lèvre annulaire (18g₁) et des passages d'eau de refroidissement à grande ouverture (18h₂) sont prévus sur plusieurs parties de la seconde lèvre annulaire (18g₂) du côté supérieur de la partie verticale (18f) de l'élément de clapet (18) dans une direction presque verticale de la seconde lèvre annulaire (18g2).

2. Clapet à commande thermique selon la revendication 1, dans lequel les passages d'eau de refroidissement (18h₁, 18h₂) prévus sur plusieurs parties d'une lèvre annulaire (18g₁, 18g₂) formés sur la partie presque verticale (18f) de l'élément de clapet (18) dans une direction presque verticale de la lèvre annulaire (18g₁, 18g₂) sont munis d'une rainure ouverte chacune de forme conique à partir du côté supérieur de l'élément de clapet (18) vers la partie horizontale (18e) de l'élément de clapet.

3. Clapet à commande thermique selon la revendication 1, dans lequel les passages d'eau de refroidissement (18h₁, 18h₂) prévus sur plusieurs parties des deux lèvres annulaires (18g₁, 18g₂) formés sur la partie presque verticale (18f) de l'élément de clapet (18) comportent des rainures à petite ouverture chacune formée sur plusieurs parties de la première lèvre annulaire (18g₁) dans une direction verticale de la première lèvre annulaire (18g₁) et de forme conique à partir de l'extrémité supérieure de l'élément de clapet (18) vers la partie horizontale (18e), et des rainures à grande ouverture chacune formée sur plusieurs parties de la seconde lèvre annulaire (18g₂) dans une direction verticale de la seconde lèvre annulaire (18g₂) et de forme conique à partir du côté supérieur de l'élément de clapet (18) vers la partie horizontale (18e) de l'élément de clapet (18) .

4. Clapet à commande thermique selon la revendication 1, dans lequel le thermoélément (TH) est muni d'un élément à dilatation thermique (7) qui se dilate et se contracte avec des changements de température de l'eau de refroidissement, logé dans un boîtier (6) et comporte un élément mobile (13) glissant dans un guide cylindrique (9) relié au boîtier (6) par l'élément à dilatation thermique (7) qui se dilate et se contracte, et l'extrémité de pointe de l'élément mobile (13) est portée par l'extrémité supérieure (14c') d'une partie support (14c) du corps de siège de clapet (14) et l'élément de clapet (18) est fixé au cylindre de guidage (9) se déplaçant en réaction avec le glissement de l'élément mobile (13) pour contacter le siège de clapet (14b) du corps de siège de clapet (14) et s'en écarter.
